# EUROPÄISCHE PATENTSCHRIFT

(11) **EP 4 224 649 B1**
(45) Veröffentlichungstag und Bekanntmachung des Hinweises auf die Patenterteilung: **21.08.2024**
(21) Anmeldenummer: 22155021.3
(22) Anmeldetag: 03.02.2022
(51) Int. Cl.: H02G 3/08, H02G 3/12

(54) **FEUCHTIGKEITSGESCHÜTZTER GERÄTERAHMEN FÜR EINEN ELEKTRISCHEN GERÄTEEINSATZ UND EINE ENTSPRECHENDE ANORDNUNG**
MOISTURE-PROOF DEVICE FRAME FOR AN ELECTRICAL APPLIANCE INSERT AND CORRESPONDING ARRANGEMENT
CADRE D'APPAREIL PROTÉGÉ CONTRE L'HUMIDITÉ POUR UN INSERT D'APPAREIL ÉLECTRIQUE ET AGENCEMENT CORRESPONDANT

(43) Veröffentlichungstag der Anmeldung: 09.08.2023
(73) Patentinhaber: Gira Giersiepen GmbH & Co. KG, 42477 Radevormwald (DE)
(72) Erfinder: Budweg, Mario, 42499 Hückeswagen (DE); Marovac, Milan, 51647 Gummersbach (DE); Bolt, Anatoli, 40699 Erkrath (DE)
(74) Vertreter: Angerhausen, Christoph

(56) Entgegenhaltungen:
- DE-A1- 102008 015 128
- DE-U- 1 987 779
- JP-A- H07 274 346
- US-A- 3 684 819

## Beschreibung

Die Erfindung geht aus von einem feuchtigkeitsgeschützten Geräterahmen für einen elektrischen Geräteeinsatz, wobei der Geräterahmen einen Installationsraum für einen Geräteeinsatz und eine den Installationsraum begrenzende Montageseite für die Aufputz-Montage mit einem Durchbruch für die Kabel- und/oder Gerätedurchführung aufweist. Ein derartiger feuchtigkeitsgeschützter Geräterahmen ist aus der DE 15 90 146 A1 bekannt. Ein Geräterahmen mit den Merkmalen des Oberbegriffs des Anspruchs 1 ist in der JP H07 274346 A beschrieben. Ähnliche feuchtigkeitsgeschützte Rahmen sind ferner aus der EP 2 518 848 B1, US 3 684 819 A und DE 1987 779 U bekannt.

Insbesondere aus ästhetischen Gründen sollen feuchtigkeitsgeschützte Geräterahmen für die Aufputz-Montage eine möglichst geringe Aufbauhöhe aufweisen, wodurch zwangsläufig der für die Aufnahme des elektrischen Geräteeinsatzes zur Verfügung stehende Installationsraum insbesondere in der Richtung senkrecht zur Montageseite entsprechend geringe Abmessungen aufweist. Dies konkurriert jedoch mit der steigenden technischen Komplexität der zu verbauenden elektrischen Geräteeinsätze, beispielsweise von Türsprechanlagen, die häufig neben ihrer originären Sprach- und häufig auch Videofunktion vielfältige weitere Funktionalitäten aufweisen können, beispielsweise ein Modul zur Erfassung biometrischer Informationen für die Zugangskontrolle, etwa ein Fingerprint-Modul. Da diese zum Teil technisch komplexen Geräteeinsätze zudem zumindest im Bereich ihrer kabelgebundenen Schnittstellen häufig feuchtigkeitsempfindlich sind, bedürfen sie der feuchtigkeitgeschützten Aufnahme in dem Geräterahmen, einschließlich etwaiger Verbindungsmittel für Versorgungsleitungen und/oder Datenleitungen, beispielsweise eines standardisierten Steckverbinders, etwa eines Keystone-Moduls.

Es ist daher die Aufgabe der Erfindung, einen feuchtigkeitsgeschützten Geräterahmen vorzuschlagen, welcher einerseits eine flache Bauweise des Geräterahmens insbesondere in der Abmessung senkrecht zur Montageseite, und andererseits einen möglichst großen Installationsraum für einen Geräteeinsatz und etwaige Anschlusskomponenten aufweist.

Diese Aufgabe wird durch einen feuchtigkeitsgeschützten Geräterahmen mit den Merkmalen des Anspruchs 1 gelöst. Die abhängigen Ansprüche betreffen jeweils vorteilhafte Ausführungsformen der Erfindung.

Demgemäß ist vorgesehen, dass der Geräterahmen ein topfförmiges Dichtungselement aufweist, welches den Installationsraum erweitert und dazu mit seiner Öffnung fluidisch dichtend an dem Durchbruch festgelegt ist. Das topfförmige Dichtungselement kann somit den von dem möglicherweise sehr flach bauenden Geräterahmen bereitgestellten Installationsraum um das Volumen des topfförmigen Dichtungselements erweitern. Das Volumen des topfförmigen Dichtungselements mündet über den Durchbruch in den Installationsraum, sodass der Installationsraum an einer rückwärtigen Seite des Geräterahmens, an welcher die Montageseite angeordnet ist, um das Volumen des topfförmigen Dichtelementes erweitert wird. Das topfförmige Dichtelement kann sich somit vorzugsweise ausgehend von dem Durchbruch im Wesentlichen senkrecht von der Montageseite erstrecken. Wenn der Geräterahmen beispielsweise an einer Gebäudewand montiert ist, kann sich das topfförmige Dichtungselement in eine von dem Geräterahmen überdeckte Ausnehmung in der Gebäudewand hineinerstrecken, beispielsweise in eine in der Gebäudewand aufgenommenen Installationsdose, etwa eine eingeputzte Unterputzdose. Der Geräterahmen ist jedoch nicht für die Montage auf Installationsdosen beschränkt.

Das topfförmige Dichtungselement kann entlang eines Außenumfangs seiner Öffnung lösbar an dem Durchbruch festgelegt sein. Das topfförmige Dichtungselement ist vorzugsweise über einen Reibschluss und besonders bevorzugt über einen Reibschluss und einen Kraftschluss an dem Durchbruch festgelegt.

Erfindungsgemäß ist vorgesehen, dass das topfförmige Dichtungselement entlang des Außenumfangs seiner Öffnung eine umlaufende Nut, vorzugsweise eine Ringnut aufweist, über die das topfförmige Dichtungselement mit einer den Durchbruch begrenzenden umlaufenden Kante der Montageseite im Eingriff steht. Um die nachträgliche Montage des topfförmigen Dichtungselements bei bereits auf einer Unterlage, beispielsweise einer Gebäudewand, montierten Geräterahmen zu erlauben, können die gegenüberliegenden Nutenwände eine unterschiedliche Höhe in Bezug auf den Nutboden aufweisen. So kann beispielsweise eine erste Nutenwand eine Auflage- bzw. Referenzfläche aufweisen, mit der das Dichtungselement im montierten Zustand auf einem Rand des Durchbruchs aufliegt, während eine zweite, der ersten Nutenwand gegenüberliegende, kürzere
Nutenwand die Funktion einer axialen Sicherungslippe aufweist, welche insbesondere zur Festlegung des Dichtungselements der zuvor beschriebenen Montageposition dient und im Übrigen vorzugsweise eine zusätzliche fluidische Abdichtung bereitstellt. Die erste Nutenwand kann an einer dem Installationsraum zugewandten Seite auf der Montageseite aufliegen, während die kürzere Nutenwand die Montageseite an der der Gebäudewand zugewandten Seite der Montageseite umgreift.

Das topfförmige Dichtungselement kann demgemäß für die Nachrüstung bekannter Geräterahmen für die Gebäudeinstallation vorgesehen sein. Diese weisen üblicherweise den beschriebenen Durchbruch für die Kabel- und/oder Gerätedurchführung auf, welcher in seinen Abmessungen standardisiert sein kann, beispielsweise auf das lichte Öffnungsmaß einer Unterputzdose abgestimmt sein kann. So ist es beispielsweise möglich, dass das erfindungsgemäße topfförmige Dichtungselement nur dann zur Anwendung kommt, wenn der in dem Geräterahmen zu installierende elektrische Geräteeinsatz über den von dem Geräterahmen von Haus aus bereitgestellten Installationsraum hinaus zusätzlichen feuchtigkeitsgeschützten Installationsraum erfordert.

Das topfförmige Dichtungselement kann eine Weichkomponente aus einem Dichtungswerkstoff aufweisen. Vorzugsweise liegt die Weichkomponente mit einem umlaufenden Flansch auf einem Rand des Durchbruchs auf. Der umlaufende Flansch kann beispielsweise eine der bereits erwähnten, gegenüberliegenden Seitenwände einer umlaufenden Nut am Außenumfang der Öffnung des topfförmigen Dichtungselements sein.

Demgemäß kann der Flansch der Weichkomponente entlang seines Außenumfangs eine umlaufende Nut, vorzugsweise eine Ringnut aufweisen, über die der Flansch mit einer umlaufenden Kante des Durchbruchs im Eingriff steht.

Der Flansch der Weichkomponente kann einen Verstärkungsring aus Metall oder Hartplastik aufweisen. Der Verstärkungsring kann insbesondere die Öffnung des topfförmigen Dichtungselements stabilisieren, um bei einer Ausführungsform prozesssicher die fluidisch dichtende Festlegung des topfförmigen Dichtungselements an dem Durchbruch der Montageseite zu gewährleisten.

Bei einer Ausführungsform kann der Verstärkungsring dazu eingerichtet sein, die bereits erwähnte umlaufende Nut, mit der das topfförmige Dichtungselement im Eingriff mit einem Rand des Durchbruchs stehen kann, zu stabilisieren. Dazu kann der Verstärkungsring zumindest teilweise in den oben genannten Flansch eingebettet sein.

Der Verstärkungsring kann beispielsweise im Querschnitt eine L-förmige Geometrie aufweisen und die Nut an zwei senkrecht zueinanderstehenden Seiten stabilisieren. Der Verstärkungsring kann vorzugsweise eine Auflagelippe der umlaufenden Nut, mit der der Flansch an der dem Installationsraum zugewandten Seite auf dem Rand des Durchbruchs aufliegt, in Bezug auf einen Nutboden stabilisieren. Besonders bevorzugt kann eine der Auflagelippe gegenüberliegende Sicherungslippe der umlaufenden Nut unstabilisiert sein, wodurch sie die für die Montage und Demontage des Dichtungselements, bei der die Sicherungslippe den Rand des Durchbruchs durch elastische Verformung überwinden muss, damit der Rand in der Nut in Eingriff gelangen kann, erforderliche Flexibilität aufweist.

Die umlaufende Nut kann an der von dem Installationsraum abgewandten Seite die umlaufende Kante des Durchbruchs mit einer Sicherungslippe hintergreifen, die in Bezug auf den Nutboden kürzer im Vergleich zu einer der Sicherungslippe gegenüberliegenden Auflagelippe der umlaufenden Nut ist, mit der der Flansch an der dem Installationsraum zugewandten Seite auf dem Rand des Durchbruchs aufliegt.

Das topfförmige Dichtungselement, vorzugsweise eine Weichkomponente des Dichtungselements aus einem Dichtungswerkstoff, ist vorzugsweise als ein zumindest in der Richtung senkrecht zur Montageseite gefalteter und damit in dieser Richtung verstellbarer Faltenbalg ausgebildet. Dies ermöglicht es, dass der von dem Dichtungselement bereitgestellte zusätzliche Installationsraum abhängig von den Abmessungen in dem Installationsraum unterzubringender Komponenten erweitert werden kann. Weiterhin erlaubt es die Flexibilität des Dichtungselements, welche auch unabhängig von dem beschriebenen Faltenbalg bereitgestellt sein kann, weil der Dichtungswerkstoff der Weichkomponente per se elastisch ist, dass das Dichtungselement von beispielsweise in einer Unterputzdose vorhandenen Kabeln verdrängt wird, sodass eine Kollision zwischen in dem topfförmigen Dichtungselement anzuordnenden Komponenten und bereits in beispielsweise einer Unterputzdose vorverlegten Kabeln und der gleichen ausgeschlossen wird.

Das topfförmige Dichtungselement, vorzugsweise eine Weichkomponente des Dichtungselements aus einem Dichtungswerkstoff, kann an einem von der Öffnung des topfförmigen Dichtungselements abgewandten Boden mindestens einen Durchlass für einen elektrischen Leiter oder Steckverbinder, oder für eine andere elektrische Komponente der Gebäudeinstallation, aufweisen. Der Durchlass kann beispielsweise von einer durchstechbaren Membran oder Materialverjüngung des topfförmigen Dichtungselements oder der Weichkomponente verschlossen sein. Wenn der Durchlass als durchstechbare Membran oder Materialverjüngung ausgebildet ist, kann aufgrund der Eigenelastizität des Dichtungselements bzw. der Weichkomponente nach dem Durchstechen und Hindurchführen des Kabels oder einer Komponente durch den Durchbruch die dichtende Anlage des Dichtungselements an der hindurchgeführten Komponente und damit eine ausreichende fluidische Abdichtung des Installationsraums von der Umgebung des Geräterahmens gewährleistet werden.

Gemäß einem anderen Aspekt wird eine Anordnung aus einem feuchtigkeitsgeschützten Geräterahmen der zuvor beschriebenen Art und einer Installationsdose, vorzugsweise einer Unterputzdose, beschrieben, wobei der feuchtigkeitsgeschützte Geräterahmen auf der Installationsdose montiert ist und das topfförmige Dichtungselement in die Installationsdose hineinragt.

Wenn das topfförmige Dichtungselement eine Weichkomponente aus einem Dichtungswerkstoff mit einem umlaufenden Flansch aufweist, kann vorgesehen sein, dass der umlaufende Flansch dichtend auf einem dem feuchtigkeitsgeschützten Geräterahmen zugewandten umlaufenden Rand der Installationsdose aufliegt. Wenn die Weichkomponente, insbesondere der umlaufende Flansch der Weichkomponente einen Verstärkungsring aufweist, kann dieser an der dem umlaufenden Rand der Installationsdose zugewandten Seite des Dichtungselements freiliegen und eine Anlagefläche bereitstellen, mit welcher das topfförmige Dichtungselement auf der Installationsdose aufliegt, sodass eine definierte Anlagefläche zwischen dem Dichtungselement und der Dose bereitgestellt ist. Dies kann die Abdichtung des Installationsraum insoweit fördern, als dass bei der Montage des Geräterahmens auf der Installationsdose, wobei über Befestigungsmittel, beispielsweise Schrauben ein Anpressdruck zwischen der Montageseite und der Installationsdose bereitgestellt wird, das zwischen der Montageseite und der Unterputzdose angeordnete topfförmige das Dichtungselement, insbesondere dessen umlaufender Flansch, prozesssicher an der Montageseite, insbesondere am Rand des Durchbruchs, angepresst wird und damit eine fluidische Abdichtung zwischen der Montageseite und dem topfförmigen Dichtungselement bereitgestellt wird. Dies ist jedoch lediglich eine beispielhafte Ausführungsform einer erfindungsgemäßen Anordnung.

Die Installationsdose ist lediglich vorzugsweise eine Unterputzdose, es ist sind auch andere Installationsdosen grundsätzlich zur Ausführung der Erfindung geeignet, obschon für den bevorzugten flachen Wandaufbau in die Wand integrierte Installationsdosen, mithin Unterputzdosen, bevorzugt werden.

Ein Steckverbinder, etwa ein Keystone-Adapter, oder eine andere Komponente, vorzugsweise eine feuchtigkeitsempfindliche elektrische Komponente, kann in dem von dem topfförmigen Dichtungselement von der Installationsdose fluidisch abgetrennten Installationsraum angeordnet sein, wobei ein elektrischer Leiter der elektrischen Komponente von der Installationsdose durch einen Durchlass im Boden des topfförmigen Dichtungselements hindurchgeführt ist, und wobei vorzugsweise das Dichtungselement den Außenumfang des elektrischen Leiters fluidisch dichtend umschließt.

Weitere Einzelheiten der Erfindung werden anhand der nachstehenden Figuren erläutert. Dabei zeigt:
- Figur 1: eine Querschnittsansicht einer beispielhaften Ausführungsform eines topfförmigen Dichtungselements;
- Figur 2: eine perspektivische Ansicht des topfförmigen Dichtungselements gemäß Figur 1;
- Figur 3: eine perspektivische Rückansicht des topfförmigen Dichtungselements gemäß Figur 1;
- Figur 4: eine perspektivische Ansicht einer weiteren beispielhaften Ausführungsform eines topfförmigen Dichtungselements;
- Figur 5: eine perspektivische Ansicht einer beispielshaften Ausführungsform eines feuchtigkeitsgeschützten Geräterahmens mit entnommenen topfförmigem Dichtungselement;
- Figur 6: die Ausführungsform gemäß Figur 5, wobei das topfförmige Dichtungselement an dem Geräterahmen festgelegt ist;
- Figur 7: eine Querschnittsansicht einer weiteren Ausführungsform eines feuchtigkeitsgeschützten Geräterahmens; und

Figuren 8 und 8a eine Detailansicht der Ausführungsform gemäß Figur 7.

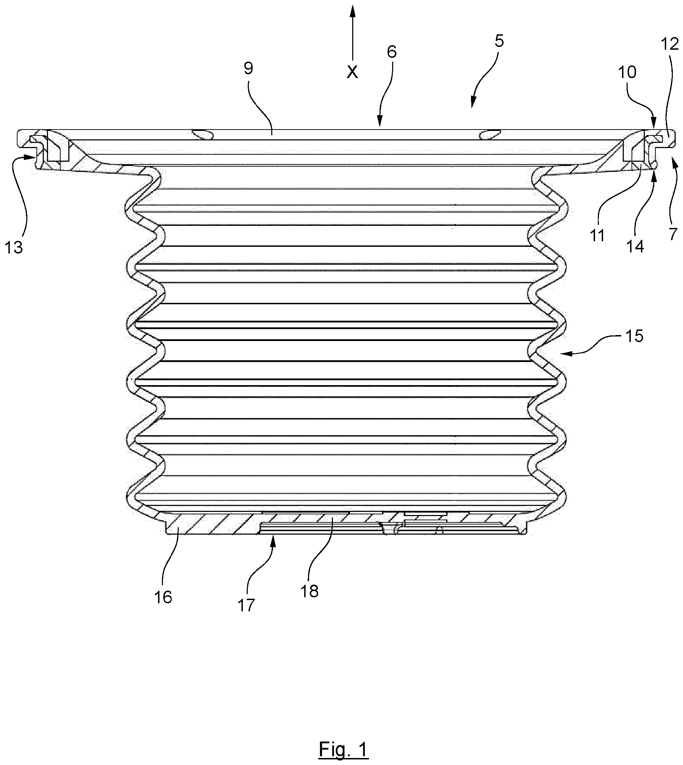

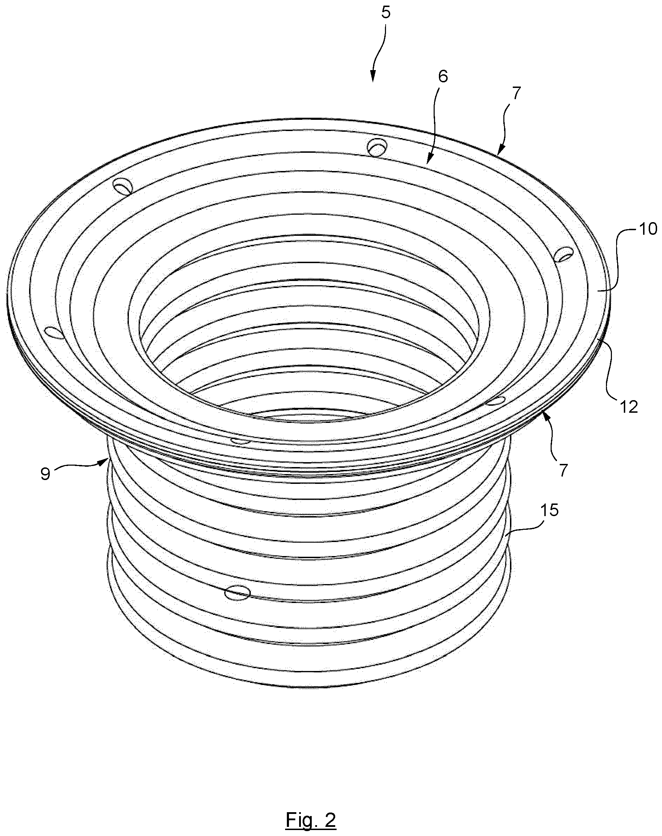

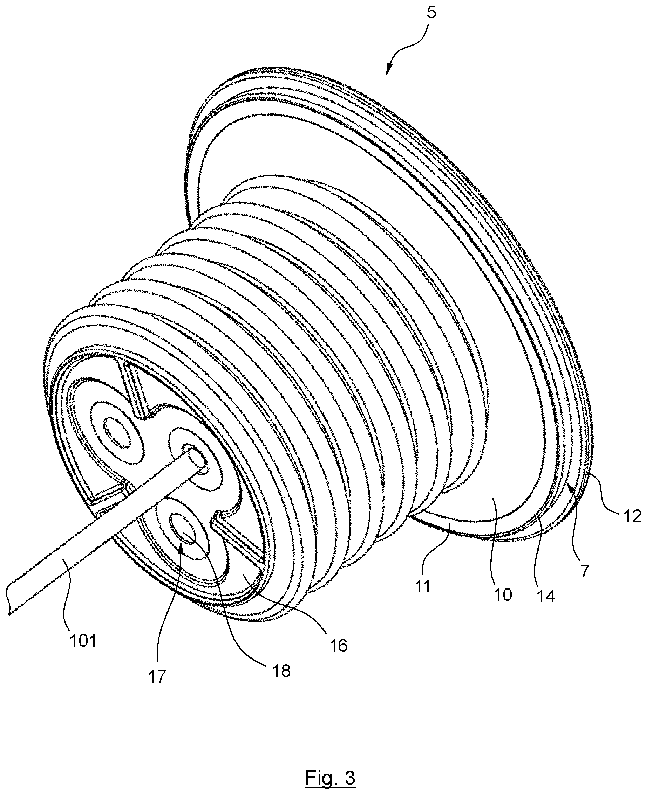

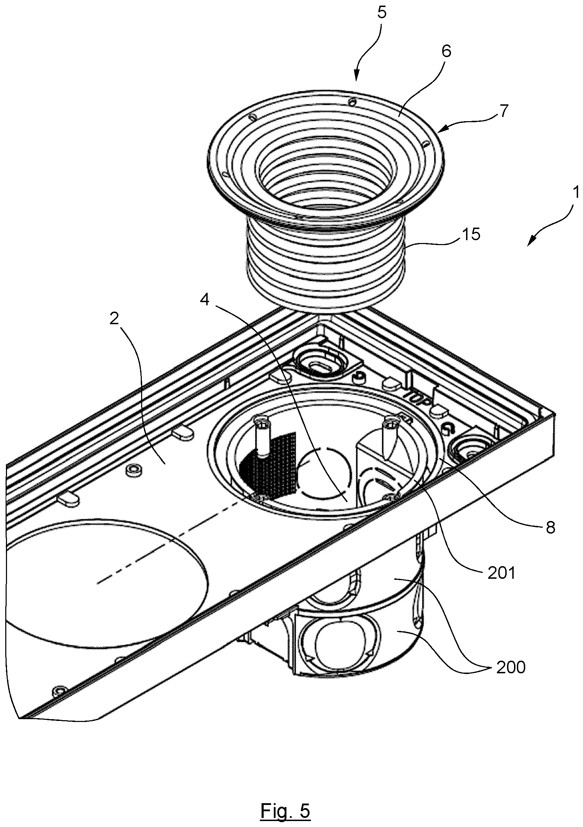

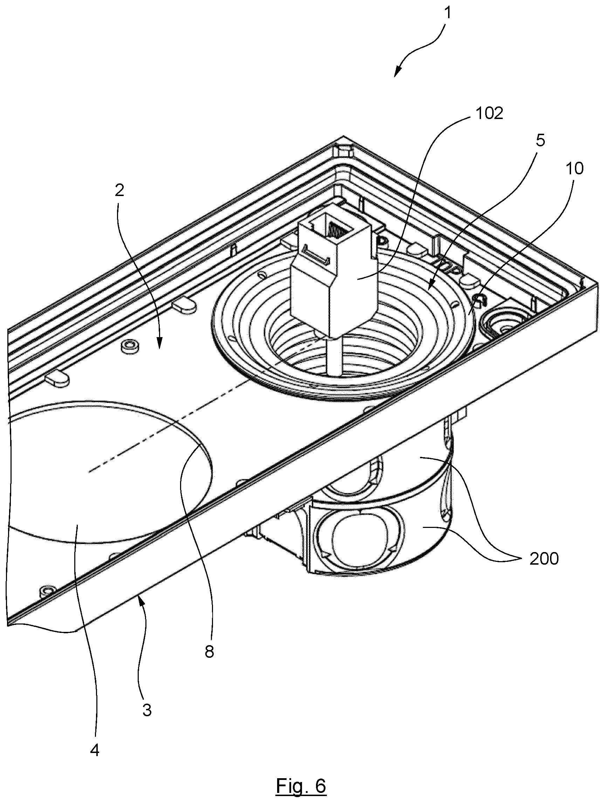

Die Figuren 1 bis 3 zeigen eine erste beispielhafte Ausführungsform eines topfförmigen Dichtungselements 5 zur Bereitstellung eines feuchtigkeitsgeschützten Geräterahmens 1, wie er beispielsweise in den Figuren 5 und 6 gezeigt ist. Das topfförmige Dichtungselement 5 kann insbesondere als Nachrüstung für einen gängigen Geräterahmen 1 ausgebildet sein, mithin Befestigungsmittel an seiner Öffnung 6 aufweisen, die für die fluidisch dichte Festlegung des topfförmigen Dichtungselements an einem Durchbruch 4 durch eine Montageseite 3 des Geräterahmens 1 ausgelegt sind. Für die Befestigung ist vorliegend eine Nut 7 vorgesehen, die entlang des Außenumfangs der Öffnung 6 des topfförmigen Dichtungselements 5 umlaufend ausgebildet ist und mit einer Kante 8 des Durchbruchs 4 in Eingriff gebracht werden kann, um das topfförmige Dichtungselement 5 an der Montageseite 3 derart festzulegen, dass der von dem Geräterahmen 1 standardmäßig gebildete Installationsraum 2 um das Volumen des topfförmigen Dichtungselements 5 rückwärtig erweitert wird.

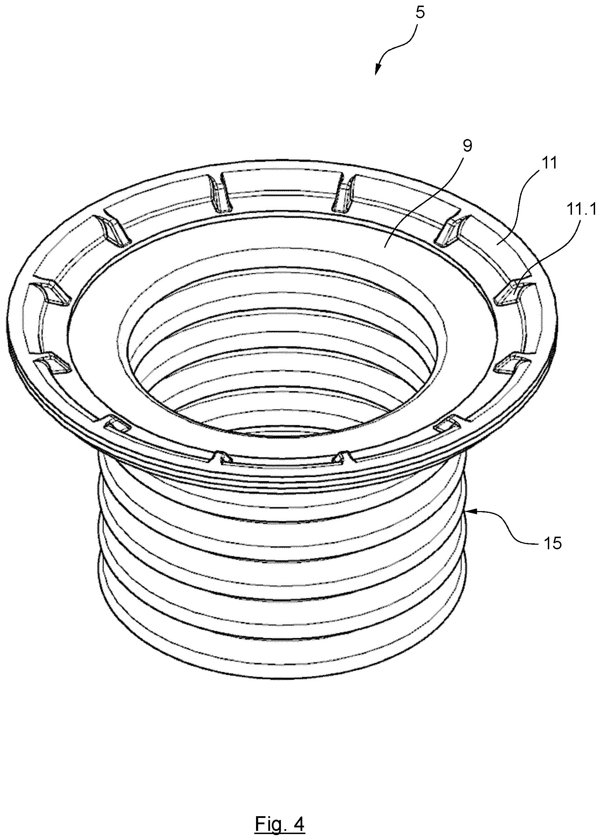

Das topfförmige Dichtungselement 5 weist eine Weichkomponente 9 aus einem Dichtungswerkstoff auf. Die Weichkomponente 9 weist wiederum einen umflaufenden Flansch 10 auf, mit dem das topfförmige Dichtungselement 5 installationsraumseitig auf einem Rand bzw. einer Kante 8 des Durchbruchs 4 der Montageseite 3 aufliegen kann. Der Dichtungswerkstoff kann ein für Dichtungselemente gängiger Elastomerwerkstoff sein oder ein Acrylnitril-Butadien-Kautschuk (NBR)-basierter Werkstoff. Der Dichtungswerkstoff kann ein elastischer Dichtungswerkstoff sein, welcher sich an die räumlichen Gegebenheiten beispielsweise innerhalb einer Unterputzdose 200, auf welcher der Geräterahmen 1 montiert ist, reagieren kann, beispielsweise auf eine in der Unterputzdose 200 bereits vorhandene Verkabelung oder sonstige elektrotechnische Installation. Durch die Elastizität des topfförmigen Dichtungselements 5 wird gewährleistet, dass das topfförmige Dichtungselement 5 der Vorinstallation in der Unterputzdose 200 ausweichen kann und somit das topfförmige Dichtungselement 5 nicht mit der Vorinstallation kollidiert. Wie es in den Figuren 5 bis 7 gezeigt ist, ist das topfförmige Dichtungselement 5 demgemäß dazu einrichtet, den Installationsraum 2 des Geräterahmens 1 rückwärtig, d.h. in Richtung der Unterlage, auf welcher der Geräterahmen 1 montiert wird, beispielsweise eine Gebäudewand, zu erweitern. Insbesondere kann sich das topfförmige Dichtungselement 5 in eine Installationsdose der Unterlage, beispielsweise in eine in eine Gebäudewand eingeputzte Unterputzdose 200 hinein erstrecken und dort mit seinem Topfvolumen zumindest einen Teil des Innenvolumens der Unterputzdose 200 einnehmen, um den Installationsraum 2 des Geräterahmens 1 um das Topfvolumen zu erweitern. Für die fluidisch dichte Verbindung des topfförmigen Dichtungselements 5 an der Kante 8 des Durchbruchs 4 weist das Dichtungselement 5 an seinem umlaufenden Flansch 10 eine Nut 7 auf, über die das Dichtungselement 5 auf die Kante 8 aufgeschoben werden kann. Für den sicheren Halt und die fluidische Abdichtung zwischen der Kante 8 und dem topfförmigen Dichtungselement 5 weist das Dichtungselement 5 an dem die Nut 7 aufweisenden Außenumfang einen Verstärkungsring 11 auf. Bei der Ausführungsform gemäß den Figuren 1 bis 3 ist der Verstärkungsring 11 in die Weichkomponente 9 integriert. Bei der Ausführungsform gemäß Figur 4 ist der Verstärkungsring 11 als ein auf die Weichkomponente 9 aufgesetzter Ring ausgebildet, der ebenfalls aus einem Kunststoffmaterial besteht, jedoch im Vergleich zu der Weichkomponente eine höhere Materialsteifigkeit aufweist. Bei der Ausführungsform gemäß Figur 4 weist der Verstärkungsring radial verlaufende Verstärkungsrippen 11.1 auf.

Bei der Ausführungsform gemäß den Figuren 1 bis 3 ist der in die Weichkomponente 9 integrierte Verstärkungsring 11 im Wesentlichen L-förmig ausgebildet, mit einem ersten Abschnitt, der einen Nutboden 13 stabilisiert und mit einem daran angrenzenden und im Wesentlichen 90° dazu verlaufenden zweiten Abschnitt eine Auflagelippe 12 stabilisiert, mit der das Dichtungselement 5 auf der Kante 8 der Montageseite 3 zu Auflage kommt, wenn das Dichtungselement 5 aus der in Figur 5 gezeigten abgehobenen Position durch Absenken auf die Montageseite 3 durch den Durchbuch 4 hindurch eingesetzt wird, bis das Dichtungselement 5 die in Figur 6 gezeigte Montageposition einnimmt, bei welcher das Dichtungselement 5 mit seiner umlaufenden Nut 7 mit der Kante 8 in Eingriff steht. Mithin der stabilisiert der Verstärkungsring 11 die Auflagelippe 12 in Bezug auf den Nutboden 13.

In der Zusammenschau der Figuren 1 bis 6 wird deutlich, dass für die Überführung des Dichtungselements 5 aus der in Figur 5 gezeigten abgehobenen Position in die in Figur 6 gezeigte Montageposition die Sichtungslippe 14 die Kante 8 passieren muss, um sie zur Festlegung des Dichtungselements 5 an der Kante 8 zu hintergreifen. Demgemäß wird die Sicherungslippe 4 von dem Verstärkungsring 11 auch nicht stabilisiert, insbesondere nicht in Bezug auf den Nutboden 13. Dabei bilden der Nutboden 13, die Auflagelippe 12 und die Sicherungslippe 14 die Nut 7 für die Festlegung des Dichtungselements 5 auf der Kante 8 des Durchbruchs 4, wobei die Sicherungslippe 14 in Bezug auf den Nutboden 13 eine kleinere Länge als die Auflagelippe 12 aufweist. Während der Nutboden 13 einen radialen Dichtungsbereich bildet, weist die Sicherungslippe 14 im Zusammenwirken mit der Auflagelippe 12 die Funktion der axialen Festlegung des Dichtungselements 5 in Bezug auf die Montageseite 3 auf.

Die Weichkomponente 9 weist einen von der Öffnung 6 abgewandten Boden 16 auf, der über eine als Faltenbalg 15 ausgebildete umlaufende Außenwand des Dichtungselements 5 mit dem Flansch 10 verbunden bzw. in Bezug auf den Flansch 10 in der Axialrichtung x verstellbar ist. Der Boden 16 weist Durchlässe 17 auf, die über Materialverjüngungen 18 verschlossen sind. Die Materialverjüngungen 18 können beispielsweise von einem elektrischen Leiter 101 durchstochen werden, damit der elektrische Leiter 101 beispielsweise aus einer Unterputzdose 200 in den feuchtigkeitsgeschützten Geräterahmen 1 eingeführt werden kann, um dort mit einer elektrischen Komponente 102 verbunden zu werden. Aufgrund der Elastizität der Weichkomponente 9 kann mit dem Durchstechen des Leiters 101 sichergestellt werden, dass die Weichkomponente 9 den Leiter 101 umschließt und damit den Innenraum des Dichtungselements 5 gegenüber der Umgebung, insbesondere dem Innenraum der Unterputzdose 200, fluidisch abtrennt.

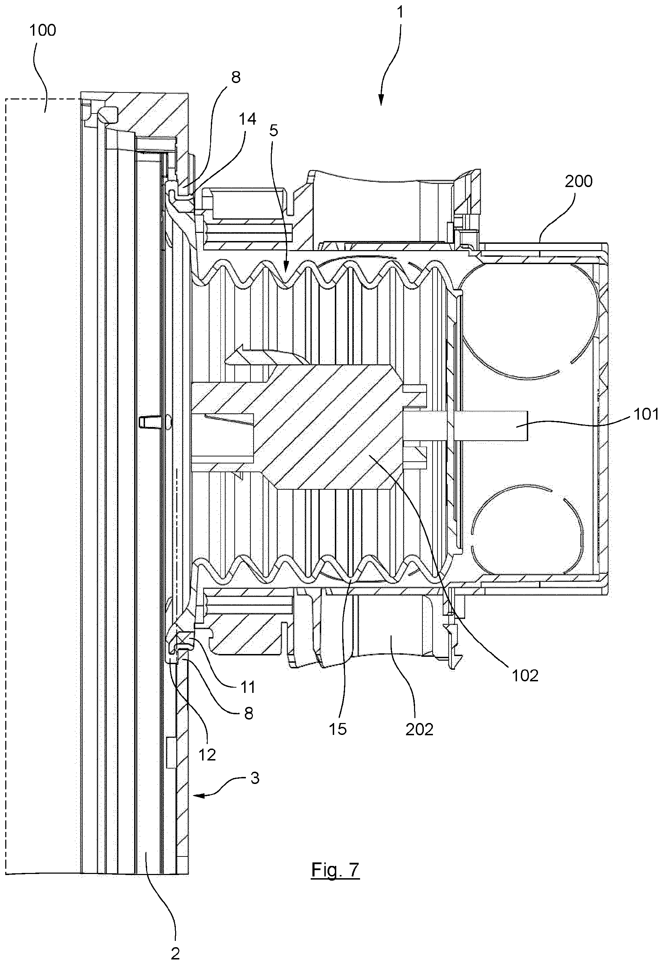

Die Figuren 5 und 6 veranschaulichen den Montagevorgang eines topfförmigen Dichtungselements 5 in einem Geräterahmen 1, der beispielsweise ein handelsüblicher Geräterahmen sein kann. Derartige Geräterahmen 1 weisen üblicherweise in ihrer Montageseite 3 mindestens einen Durchbruch 4 für die Kabeldurchführung aus einer Installationsdose oder für die Hindurchführung eines Geräteeinsatzes 100 auf, der eine Bautiefe aufweist, welche es erfordert, dass der Geräteeinsatz 1 durch den Durchbruch 4 hindurch aus dem Geräterahmen 1 heraus in die darunterliegende Installationsdose, etwa eine Unterputzdose 200, hineinragt. So kann es erforderlich sein, dass eine Anschlusskomponente für einen in dem Geräterahmen montierten Geräteeinsatz selbst keinen Platz mehr in dem von dem Geräterahmen 1 ohne die Verbindung des erfindungsgemäßen Dichtungselements 5 bereitgestellten Installationsraum 2 findet und daher zwangsläufig allenfalls noch in der Unterputzdose 200 untergebracht werden kann. Eine solche Installationskomponente kann beispielsweise der in Figur 6 gezeigte Steckverbinder 102 sein, der beispielsweise ein Keystone-Adapter für den Netzwerkanschluss sein kann. Um diesen beispielsweise noch bei bereits montiertem Geräteeinsatz 100 feuchtigkeitsgeschützt in dem Geräterahmen 1 unterzubringen, kann ein erfindungsgemäßes Dichtungselement 5 Anwendung finden, wie es in Figur 7 gezeigt ist. Während der Geräteeinsatz 100 in der üblichen Weise von der Vorderseite des Geräterahmens 1 formatfüllend den Installationsraum 2 überbaut, kann das Dichtungselement 5 den Installationsraum 2 rückwärtig, d.h. über die Montageseite 3 hinaus erweitern und über die in der Montageseite 3 vorgesehenen Durchbrüche in den Installationsraum 2 des Geräterahmens 1 münden, um beispielsweise einen Steckverbinder 102 in dem von dem Dichtungselement 5 bereitgestellten zusätzlichen feuchtigkeitsgeschützten Installationsraum anzuordnen. Da das Dichtungselement 5 zumindest im Bereich seines Faltenbalgs 15 elastisch ausgebildet ist, kann es einer Installation, die bereits in der Unterputzdose 2 vorhanden ist, ausweichen. Beispielsweise könnte über die Kabelzuführung 202 der Unterputzdose 200 mindestens ein Kabel in die Unterputzdose 2 eingeleitet werden. Die in Figur 7 erkennbare Kollision des Faltenbalgs 15 mit dem lichten Öffnungsmaß der Kabelzuführung 202 würde in dem letztgenannten Fall dadurch aufgelöst, dass die eingeleiteten Kabel den Faltenbalg 15 im Bereich der Kabelzuführung 202 verdrängen würden, sodass die Kabel an dem Faltenbalg 15 vorbei beispielsweise in den hinteren Bereich der Unterputzdose 200 geführt werden könnten, welcher nicht von dem Faltenbalg 15 eingenommen wird.

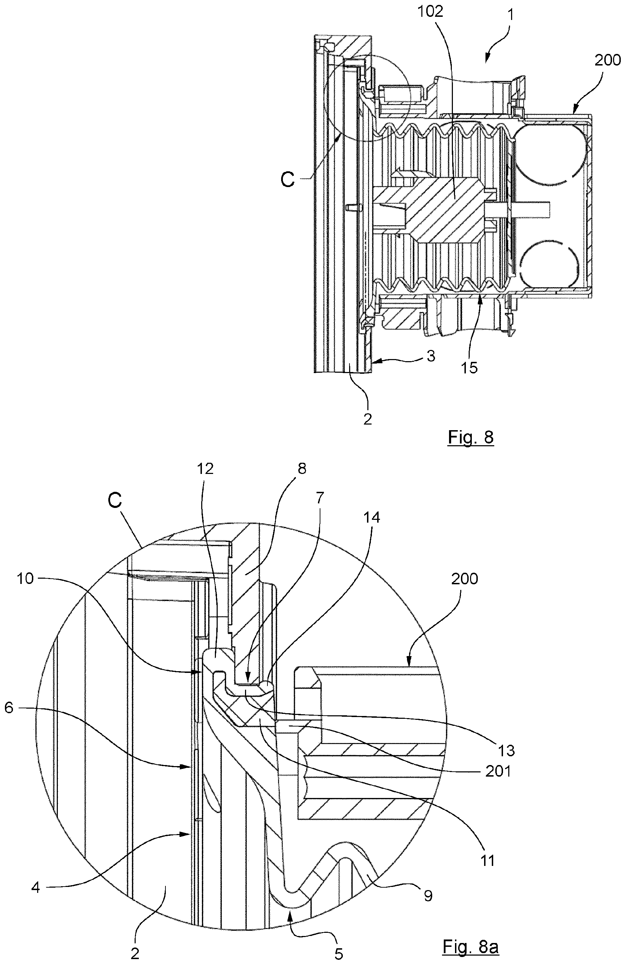

Weitere Einzelheiten einer beispielhaften Ausführungsform der fluidisch dichten Festlegung des Dichtungselements 5 an dem Durchbruch 4 einer Montageseite 3 eines Geräterahmens 1 sind in den Figuren 8 und 8a gezeigt. Demgemäß kann an dem Außenumfang eines die Öffnung 6 des topfförmigen Dichtungselements 5 begrenzenden Flansches 10 eine Nut 7 ausgebildet sein, die mit der den Durchbruch 4 begrenzenden Kante 8 im Eingriff steht. Ein Verstärkungsring 11 ist dazu vorgesehen, einerseits die Auflagelippe 12 der Nut 7 zu stabilisieren und damit eine definierte Anlageposition des Dichtungselements 5 in Bezug auf die Kante 8 bereitzustellen. Andererseits hat der im Querschnitt im Wesentlichen L-förmige Verstärkungsring 11 die Funktion, den Nutboden 13 zu stabilisieren und damit eine in Radialrichtung des Verstärkungsrings 11 wirkende Anpresskraft zwischen dem aus der Weichkomponente 9 gebildeten Nutboden 13 des Dichtungselements 5 und der Stirnseite der Kante 8 bereitzustellen, sodass der Nutboden 13 an der Stirnseite der Kante 8 dichtend anliegt und.

Der Geräterahmen 1 ist bei der vorliegenden Ausführungsform auf einer Unterputzdose 200 montiert, wobei der die Öffnung 6 berandende Flasch 10 rückwärtig, d.h. mit seiner der Unterputzdose 200 zugewandten Seite auf einem umlaufenden Rand 201 der Unterputzdose 200 anliegt. Obwohl zwischen der Unterputzdose und dem Dichtungselement 5, insbesondere dem Flansch 10, keine dichtende Anlage erforderlich ist, kann die Anlage des Flansches 10 auf dem umlaufenden Rand 201, insbesondere die Anlage des Verstärkungsrings 11 auf dem umlaufenden Rand 201, das topfförmige Dichtungselement 5 in der Axialrichtung stabilisieren. Um eine definierte Anlage zwischen dem Flansch 10 und dem umlaufenden Rand 201 zu gewährleisten, kann vorgesehen sein, dass der Verstärkungsring 11 an der der Unterputzdose 200 bzw. der dem umlaufenden Rand 201 zugewandten Seite freiliegt, sodass hier zwei Hartkomponenten, die Hartkomponente des Verstärkungsrings und die Unterputzdose 200 unmittelbar aufeinanderliegen und damit in einer definierten Position zueinander angeordnet sind.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Geräterahmen
- 2: Installationsraum
- 3: Montageseite
- 4: Durchbruch
- 5: Dichtungselement
- 6: Öffnung
- 7: Nut
- 8: Kante
- 9: Weichkomponente
- 10: Flansch
- 11: Verstärkungsring
- 11.1: Verstärkungsrippe
- 12: Auflagelippe
- 13: Nutboden
- 14: Sicherungslippe
- 15: Faltenbalg
- 16: Boden
- 17: Durchlass
- 18: Materialverjüngung
- 100: Geräteeinsatz
- 101: elektrischer Leiter
- 102: Steckverbinder
- 200: Unterputzdose
- 201: umlaufender Rand
- 202: Kabelzuführung
- x: Axialrichtung

## Patentansprüche

1. Feuchtigkeitsgeschützter Geräterahmen (1) für einen elektrischen Geräteeinsatz (100), wobei der Geräterahmen (1) einen Installationsraum (2) für einen Geräteeinsatz (100) und eine den Installationsraum (2) begrenzende Montageseite (3) für die Aufputz-Montage mit einem Durchbruch (4) für die Kabel- und/oder Gerätedurchführung aufweist, wobei der Geräterahmen (1) ein topfförmiges Dichtungselement (5) mit einer Öffnung (6) aufweist, welches den Installationsraum (2) erweitert und dazu mit seiner Öffnung (6) fluidisch dichtend an dem Durchbruch (4) festgelegt ist,
**dadurch gekennzeichnet, dass** das topfförmige Dichtungselement (5) entlang des Außenumfangs seiner Öffnung (6) eine umlaufende Nut (7) aufweist, über die das topfförmige Dichtungselement (5) mit einer den Durchbruch (4) begrenzenden umlaufenden Kante (8) der Montageseite (3) im Eingriff steht.

2. Feuchtigkeitsgeschützter Geräterahmen (1) nach Anspruch 1, bei dem das topfförmiges Dichtungselement (5) entlang eines Außenumfangs seiner Öffnung (6) lösbar an dem Durchbruch (4) festgelegt ist, vorzugsweise über einen Reibschluss und besonders bevorzugt über einen Reibschluss und einen Kraftschluss.

3. Feuchtigkeitsgeschützter Geräterahmen (1) nach Anspruch 1 oder 2, bei dem das topfförmige Dichtungselement (5) entlang des Außenumfangs seiner Öffnung (6) eine Ringnut aufweist.

4. Feuchtigkeitsgeschützter Geräterahmen (1) nach einem der vorangegangenen Ansprüche, bei dem das topfförmige Dichtungselement (5) eine Weichkomponente (9) aus einem Dichtungswerkstoff aufweist, die mit einem umlaufenden Flansch (10) auf einem Rand des Durchbruchs (4) aufliegt.

5. Feuchtigkeitsgeschützter Geräterahmen (1) nach Anspruch 4, bei dem der Flansch (10) der Weichkomponente (9) entlang seines Außenumfangs die umlaufende Nut (7), vorzugsweise die Ringnut aufweist, über die der Flansch (10) mit der umlaufenden Kante (8) des Durchbruchs (4) im Eingriff steht.

6. Feuchtigkeitsgeschützter Geräterahmen (1) nach Anspruch 5, bei dem der Flansch (10) der Weichkomponente (9) einen Verstärkungsring (11) aus Metall oder Hartplastik aufweist.

7. Feuchtigkeitsgeschützter Geräterahmen (1) nach Anspruch 6, bei dem der Verstärkungsring (11) dazu eingerichtet ist, die umlaufende Nut (7) zu stabilisieren, wozu der Verstärkungsring (11) zumindest teilweise in den Flansch (10) eingebettet ist.

8. Feuchtigkeitsgeschützter Geräterahmen (1) nach Anspruch 6 oder 7, bei dem der Verstärkungsring (11) im Querschnitt eine L-förmige Geometrie aufweist und die Nut (7) an zwei senkrecht zueinander stehenden Seiten stabilisiert, wobei der Verstärkungsring (11) vorzugsweise eine Auflagelippe (12) der umlaufenden Nut (7), mit der der Flansch (10) an der dem Installationsraum (2) zugewandten Seite auf dem Rand des Durchbruchs (4) aufliegt, in Bezug auf einen Nutboden (13) stabilisiert, und wobei besonders bevorzugt eine der Auflagelippe (12) gegenüberliegende Sicherungslippe (14) der umlaufenden Nut (7) unstabilisiert ist.

9. Feuchtigkeitsgeschützter Geräterahmen (1) nach einem der Ansprüche 5 bis 9, bei dem die umlaufende Nut (7) an der von dem Installationsraum (2) abgewandten Seite die umlaufende Kante (8) des Durchbruchs (4) mit einer Sicherungslippe (14) hintergreift, die kürzer im Vergleich zu einer der Sicherungslippe (14) gegenüberliegenden Auflagelippe (12) der umlaufenden Nut (7) ist, mit der der Flansch (10) an der dem Installationsraum (2) zugewandten Seite auf dem Rand des Durchbruchs (4) aufliegt.

10. Feuchtigkeitsgeschützter Geräterahmen (1) nach einem der vorangegangenen Ansprüche, bei dem das topfförmige Dichtungselement (5), vorzugsweise eine Weichkomponente (9) des Dichtungselements (5) aus einem Dichtungswerkstoff, als ein zumindest in der Richtung senkrecht zur Montageseite (3) gefalteter und damit in dieser Richtung verstellbarer Faltenbalg (15) ausgebildet ist.

11. Feuchtigkeitsgeschützter Geräterahmen (1) nach einem der vorangegangenen Ansprüche, bei dem das topfförmige Dichtungselement (5), vorzugsweise eine Weichkomponente (9) des Dichtungselements (5) aus einem Dichtungswerkstoff, an einem von der Öffnung (6) des topfförmigen Dichtungselements (5) abgewandten Boden (16) mindestens einen Durchlass (17) für einen elektrischen Leiter (101), einen Steckverbinder (102), oder für eine andere elektrische Komponente der Gebäudeinstallation aufweist.

12. Feuchtigkeitsgeschützter Geräterahmen (1) nach Anspruch 11, bei dem der Durchlass (17) von einer durchstechbaren Membran oder Materialverjüngung (18) des topfförmigen Dichtungselements (5) oder der Weichkomponente (9) verschlossen ist.

13. Anordnung aus einem feuchtigkeitsgeschützten Geräterahmen (1) nach einem der vorangegangene Ansprüche und einer Unterputzdose (200), wobei der feuchtigkeitsgeschützte Geräterahmen (1) auf der Unterputzdose (200) montiert ist und das topfförmige Dichtungselement (5) in die Unterputzdose (200) hineinragt.

14. Anordnung nach Anspruch 13, bei der das topfförmige Dichtungselement (5) eine Weichkomponente (9) aus einem Dichtungswerkstoff mit einem umlaufenden Flansch (10) aufweist, der dichtend auf einem dem feuchtigkeitsgeschützten Geräterahmen (1) zugewandten umlaufenden Rand (201) der Unterputzdose (200) aufliegt.

15. Anordnung nach Anspruch 13 oder 14, bei der ein Steckverbinder (102) oder eine andere Komponente, vorzugsweise eine feuchtigkeitsempfindliche elektrische Komponente, in dem von dem topfförmigen Dichtungselement (5) von der Unterputzdose (200) fluidisch abgetrennten Installationsraum (2) angeordnet ist, wobei ein elektrischer Leiter (101) der elektrischen Komponente von der Unterputzdose (200) durch einen Durchlass (17) im Boden (16) des topfförmigen Dichtungselements (5) hindurch geführt ist, und wobei vorzugsweise das Dichtungselement (5) den Außenumfang des elektrischen Leiters (101) fluidisch dichtend umschließt.

## Claims

1. Moisture-protected device frame (1) for an electrical device insert (100),
wherein the device frame (1) has an installation space (2) for a device insert (100) and a mounting side (3), which delimits the installation space (2), for surface mounting, with an aperture (4) for the cable and/or device feedthrough, wherein the device frame (1) has a pot-shaped sealing element (5) with an opening (6) which widens the installation space (2) and for this purpose is fixed with its opening (6) in a fluidically sealing manner on the aperture (4), **characterized in that** the pot-shaped sealing element (5) has, along the outer circumference of its opening (6), a circumferential groove (7) via which the pot-shaped sealing element (5) is in engagement with a circumferential edge (8), which delimits the aperture (4), of the mounting side (3).

2. Moisture-protected device frame (1) according to Claim 1, in which the pot-shaped sealing element (5) is fixed in a releasable manner on the aperture (4) along an outer circumference of its opening (6), preferably via a frictional connection and particularly preferably via a frictional connection and a non-positive connection.

3. Moisture-protected device frame (1) according to Claim 1 or 2, in which the pot-shaped sealing element (5) has an annular groove along the outer circumference of its opening (6).

4. Moisture-protected device frame (1) according to one of the preceding claims, in which the pot-shaped sealing element (5) has a soft component (9) made of a sealing material which rests with a circumferential flange (10) on an edge of the aperture (4).

5. Moisture-protected device frame (1) according to Claim 4, in which the flange (10) of the soft component (9) has, along its outer circumference, the circumferential groove (7), preferably the annular groove, via which the flange (10) is in engagement with the circumferential edge (8) of the aperture (4).

6. Moisture-protected device frame (1) according to Claim 5, in which the flange (10) of the soft component (9) has a reinforcing ring (11) made of metal or hard plastic.

7. Moisture-protected device frame (1) according to Claim 6, in which the reinforcing ring (11) is designed to stabilize the circumferential groove (7), for which purpose the reinforcing ring (11) is embedded at least partially in the flange (10).

8. Moisture-protected device frame (1) according to Claim 6 or 7, in which the reinforcing ring (11) has an L-shaped geometry in cross section and stabilizes the groove (7) on two sides perpendicular to one another, wherein the reinforcing ring (11) preferably stabilizes a bearing lip (12) of the circumferential groove (7), with which bearing lip the flange (10) rests on the edge of the aperture (4) on the side facing the installation space (2), with respect to a groove base (13), and wherein particularly preferably a securing lip (14) of the circumferential groove (7) opposite the bearing lip (12) is unstabilized.

9. Moisture-protected device frame (1) according to one of Claims 5 to 9, in which the circumferential groove (7) engages behind, on the side facing away from the installation space (2), the circumferential edge (8) of the aperture (4) with a securing lip (14) which is shorter in comparison with a bearing lip (12), which is opposite the securing lip (14), of the circumferential groove (7), with which bearing lip the flange (10) rests on the edge of the aperture (4) on the side facing the installation space (2).

10. Moisture-protected device frame (1) according to one of the preceding claims, in which the pot-shaped sealing element (5), preferably a soft component (9) of the sealing element (5) made of a sealing material, is designed as a bellows (15) which is folded at least in the direction perpendicular to the mounting side (3) and is thus adjustable in this direction.

11. Moisture-protected device frame (1) according to one of the preceding claims, in which the pot-shaped sealing element (5), preferably a soft component (9) of the sealing element (5) made of a sealing material, has, on a base (16) facing away from the opening (6) of the pot-shaped sealing element (5), at least one passage (17) for an electrical conductor (101), a plug connector (102), or for another electrical component of the building installation.

12. Moisture-protected device frame (1) according to Claim 11, in which the passage (17) is closed by a pierceable membrane or material tapering (18) of the pot-shaped sealing element (5) or of the soft component (9).

13. Arrangement comprising a moisture-protected device frame (1) according to one of the preceding claims and a flush-mounted box (200), wherein the moisture-protected device frame (1) is mounted on the flush-mounted box (200) and the pot-shaped sealing element (5) projects into the flush-mounted box (200).

14. Arrangement according to Claim 13, in which the pot-shaped sealing element (5) has a soft component (9) made of a sealing material with a circumferential flange (10) which rests in a sealing manner on a circumferential edge (201), which faces the moisture-protected device frame (1), of the flush-mounted box (200).

15. Arrangement according to Claim 13 or 14, in which a plug connector (102) or another component, preferably a moisture-sensitive electrical component, is arranged in the installation space (2) which is fluidically separated from the flush-mounted box (200) by the pot-shaped sealing element (5), wherein an electrical conductor (101) of the electrical component is guided from the flush-mounted box (200) through a passage (17) in the base (16) of the pot-shaped sealing element (5), and wherein the sealing element (5) preferably surrounds the outer circumference of the electrical conductor (101) in a fluidically sealing manner.

## Revendications

1. Cadre d'appareil protégé contre l'humidité (1) pour un insert d'appareil électrique (100), dans lequel le cadre d'appareil (1) comprend une chambre d'installation (2) pour un insert d'appareil (100) et un côté de montage (3) délimitant la chambre d'installation (2), pour le montage en saillie avec un passage (4) pour le guidage de câble et/ou d'appareil, dans lequel le cadre d'appareil (1) comprend un élément d'étanchéité en forme de pot (5) avec une ouverture (6), qui élargit la chambre d'installation (2) et est fixé pour cela avec son ouverture (6) de manière étanche aux fluides au passage (4),
**caractérisé en ce que** l'élément d'étanchéité en forme de pot (5) comprend, le long de la circonférence externe de son ouverture (6), une rainure périphérique (7) par l'intermédiaire de laquelle l'élément d'étanchéité en forme de pot (5) est emboîté avec une arête périphérique (8), délimitant le passage (4), du côté de montage (3).

2. Cadre d'appareil protégé contre l'humidité (1) selon la revendication 1, dans lequel l'élément d'étanchéité en forme de pot (5) est fixé le long d'une circonférence externe de son ouverture (6), de manière amovible sur le passage (4), de préférence par friction et plus particulièrement de préférence par friction et par force.

3. Cadre d'appareil protégé contre l'humidité (1) selon la revendication 1 ou 2, dans lequel l'élément d'étanchéité en forme de pot (5) présente, le long de la circonférence externe de son ouverture (6), une rainure annulaire.

4. Cadre d'appareil protégé contre l'humidité (1) selon l'une des revendications précédentes, dans lequel l'élément d'étanchéité en forme de pot (5) comprend un composant souple (9) constitué d'un matériau d'étanchéité qui repose, avec une bride périphérique (10), sur un bord du passage (4).

5. Cadre d'appareil protégé contre l'humidité (1) selon la revendication 4, dans lequel la bride (10) du composant souple (9) comprend, le long de sa circonférence externe, la rainure périphérique (7), de préférence la rainure annulaire, par l'intermédiaire de laquelle la bride (10) est emboîtée avec l'arête périphérique (8) du passage (4).

6. Cadre d'appareil protégé contre l'humidité (1) selon la revendication 5, dans lequel la bride (10) du composant souple (9) comprend une bague de renforcement (11) en métal ou en matière plastique dure.

7. Cadre d'appareil protégé contre l'humidité (1) selon la revendication 6, dans lequel la bague de renforcement (11) est conçue pour stabiliser la rainure périphérique (7), la bague de renforcement (11) étant pour cela au moins partiellement intégrée dans la bride (10).

8. Cadre d'appareil protégé contre l'humidité (1) selon la revendication 6 ou 7, dans lequel la bague de renforcement (11) présente, en section transversale, une forme de L et stabilise la rainure (7) sur deux côtés perpendiculaires entre eux, dans lequel la bague de renforcement (11) stabilise de préférence une lèvre d'appui (12) de la rainure périphérique (7), avec laquelle la bride (10) repose, au niveau du côté orienté vers la chambre d'installation (2), sur le bord du passage (4), par rapport à un fond de rainure (13) et dans lequel, plus particulièrement de préférence, une lèvre de sécurité (14), opposée à la lèvre d'appui (12), de la rainure périphérique (7), n'est pas stabilisée.

9. Cadre d'appareil protégé contre l'humidité (1) selon l'une des revendications 5 à 9, dans lequel la rainure périphérique (7) s'accroche, sur le côté opposé à la chambre d'installation (2), derrière l'arête périphérique (8) du passage (4) avec une lèvre de sécurité (14), qui est plus courte qu'une lèvre d'appui (12), opposée à la lèvre de sécurité (14), de la rainure périphérique (7), avec laquelle la bride (10) repose, au niveau du côté orienté vers la chambre d'installation (2), sur le bord du passage (4).

10. Cadre d'appareil protégé contre l'humidité (1) selon l'une des revendications précédentes, dans lequel l'élément d'étanchéité en forme de pot (5), de préférence un composant souple (9) de l'élément d'étanchéité (5) en matériau d'étanchéité, est conçu comme un soufflet (15) plié au moins dans la direction perpendiculaire au côté de montage (3) et réglable dans cette direction.

11. Cadre d'appareil protégé contre l'humidité (1) selon l'une des revendications précédentes, dans lequel l'élément d'étanchéité en forme de pot (5), de préférence un composant souple (9) de l'élément d'étanchéité (5) en matériau d'étanchéité, comprend, sur un fond (16), opposé à l'ouverture (6) de l'élément d'étanchéité en forme de pot (5), au moins un passage (17) pour un conducteur électrique (101), un connecteur enfichable (102) ou pour un autre composant électrique de l'installation du bâtiment.

12. Cadre d'appareil protégé contre l'humidité (1) selon la revendication 11, dans lequel le passage (17) est obturé par une membrane perçable ou un rétrécissement de matériau (18) de l'élément d'étanchéité en forme de pot (5) ou du composant souple (9).

13. Dispositif constitué d'un cadre d'appareil protégé contre l'humidité (1) selon l'une des revendications précédentes et d'une prise encastrée (200), dans lequel le cadre d'appareil protégé contre l'humidité (1) est monté sur la prise encastrée (200) et l'élément d'étanchéité en forme de pot (5) dépasse dans la prise encastrée (200).

14. Dispositif selon la revendication 13, dans lequel l'élément d'étanchéité en forme de pot (5) comprend un composant souple (9) constitué d'un matériau d'étanchéité avec une bride périphérique (10), qui repose de manière étanche sur un bord (201) de la prise encastrée (200), orienté vers le cadre d'appareil protégé contre l'humidité (1).

15. Dispositif selon la revendication 13 ou 14, dans lequel un connecteur enfichable (102) ou un autre composant, de préférence un composant électrique sensible à l'humidité, est disposé dans la chambre d'installation (2) isolée fluidiquement de la prise encastrée (200) par l'élément d'étanchéité en forme de pot (5), dans lequel un conducteur électrique (101) du composant électrique est guidé par la prise encastrée (200) à travers un passage (17) dans le fond (16) de l'élément d'étanchéité en forme de pot (5), et dans lequel, de préférence, l'élément d'étanchéité en forme de pot (5) entoure de manière étanche fluidiquement la circonférence externe du conducteur électrique (101).
